# DEMANDE DE BREVET EUROPEEN

(11) **EP 2 597 745 A1**
(43) Date de publication de la demande: **29.05.2013**
(21) Numéro de dépôt: 12306310.9
(22) Date de dépôt: 23.10.2012
(51) Int. Cl.: H02J 3/14, H02J 3/26

(54) **Procédé et système de gestion dynamique d un réseau de distribution d électricité**

(30) Priorité: 28.11.2011 FR 1103621
(71) Demandeur: Schneider Electric Industries SAS, 92500 Rueil-Malmaison (FR)
(72) Inventeur: Clemence, Michel, 38050 GRENOBLE Cedex 9 (FR); Contini, Erick, 38050 GRENOBLE Cedex 09 (FR); Bouteiller, Olivier, 38050 GRENOBLE Cedex 09 (FR); Waterlot, Frédéric, 38050 GRENOBLE Cedex 09 (FR); Deschamps, Philippe, 38050 GRENOBLE Cedex 09 (FR)
(74) Mandataire: Tripodi, Paul

(57) **Abrégé**

Le procédé de gestion dynamique d'un réseau de distribution d'électricité à plusieurs phases d'alimentation, comprenant une étape d'évaluation d'au moins un paramètre électrique des phases, comprend une étape de répartition des puissances transitant sur les phases, à partir des résultats de l'étape d'évaluation, comprenant les étapes suivantes :
- modulation dynamique des liaisons électriques de charges aux phases,
- et/ou modulation dynamique des liaisons électriques de générateurs aux phases.

Le système de gestion dynamique d'un réseau de distribution d'électricité à plusieurs phases d'alimentation, comprend des moyens matériels et/ou logiciels pour mettre en oeuvre le procédé de gestion.

## Description

### Domaine technique de l'invention

L'invention concerne le domaine de la gestion dynamique d'un réseau de distribution d'électricité.

L'invention porte plus précisément sur un procédé et un système de gestion dynamique d'un réseau de distribution d'électricité à plusieurs phases d'alimentation, prévoyant une évaluation d'au moins un paramètre électrique des phases.

### État de la technique

Sur un réseau électrique, la distribution terminale d'électricité est réalisée en basse tension (BT) depuis des postes de distribution MT/BT (Moyenne Tension / Basse Tension) vers des consommateurs basse tension (en nombre de l'ordre d'une centaine), notamment des foyers d'habitation. Un poste MT/BT présente plusieurs départs (en nombre de l'ordre de quatre à dix). Chaque départ se déploie en une structure radiale présentant plusieurs branchements monophasés ou triphasés. Dans le poste MT/BT, se situe un tableau BT alimentant en puissance les différents départs, chacun éventuellement protégé par des fusibles ou des disjoncteurs.

Les réseaux basse tension sont denses, parfois aériens, parfois souterrains, mélangeant des matériels variables et des câbles d'âges variables. Ils sont exploités par des sociétés d'électricité qui ont pour certaines un historique de l'ordre du siècle durant lequel ce réseau a fait l'objet de modifications, d'extensions, de répartitions. Ces réseaux sont techniquement simples, peu sujets à panne et par le fait bien souvent pas, peu, ou mal documentés.

Deux facteurs viennent se greffer sur ce contexte. D'une part, la dérégulation du secteur de l'électricité impose la séparation des acteurs. Par ailleurs, les réseaux de distribution reviennent aux distributeurs d'électricité qui conservent un statut monopolistique, mais se trouvent sous contrainte des régulateurs nationaux. Ceux-ci imposent à leurs distributeurs des objectifs de qualité de service qui doivent être mesurés, entre autre, en temps et nombre de coupures vues pas chacun des consommateurs raccordés. Ces objectifs sont contraignants et peuvent donner lieu à des pénalités s'ils ne sont pas respectés. Les distributeurs ont par conséquent besoin dorénavant d'une très grande précision sur les données de coupures et d'informations précises pour mieux localiser les éventuels défauts et défaillances.

D'autre part, toujours dans le cadre de la dérégulation, un certain nombre de pays a décidé de déployer des compteurs communicants qui évitent le déplacement de personnels pour assurer les relevés. Selon les contextes règlementaires et selon les distributeurs, différentes architectures ont été retenues pour assurer des opérations de relevés des compteurs à distance. Dans certaines de ces architectures, certains distributeurs ont décidé de mettre en place un concentrateur de données dans chaque poste de distribution MT/BT. Celui-ci assure la collecte des données de chacun des compteurs qui lui sont raccordés. Les données de comptage sont reçues par le biais de courants porteurs en ligne ou par des moyens radioélectriques à fréquence régulière (de l'ordre de la demi-heure à la journée). Le concentrateur de données renvoie ensuite l'ensemble de ces mesures à un niveau supérieur par un autre moyen de communication.

Des données de comptage en quasi temps réel de chacun des compteurs sont donc disponibles dans chaque poste MT/BT.

Pour les régies, l'équilibrage des charges sur le réseau basse tension entre les trois phases d'un départ est impactant sur le taux de pertes techniques, le taux d'exploitation du réseau et la continuité de service. Or cette problématique reste irrésolue, notamment d'une manière simple, économique et efficace.

La continuité de service et le respect du niveau de tension sont impactés par exemple par les courants circulant dans le neutre du départ, étant susceptible de provoquer la destruction de certaines connexions et par la suite des montées de potentiel.

Ce problème est d'autant plus crucial en raison de l'insertion massive actuelle de générateurs d'électricité répartis sur le réseau (photovoltaïque, éolienne, batteries, autres...) qui peuvent amener de façon périodique le réseau à saturation et donc impliquer des renforcements de réseau.

### Objet de l'invention

Le but de l'invention est de fournir un procédé de gestion dynamique d'un réseau de distribution d'électricité qui permette de remédier aux problèmes évoqués précédemment et améliorant les solutions de l'art antérieur.

En particulier, un premier objet de l'invention est de fournir un procédé de gestion qui permette de répartir les puissances transitant sur les phases.

Un deuxième objet de l'invention est que ce procédé soit simple, économique et efficace.

Un procédé de gestion dynamique d'un réseau de distribution d'électricité à plusieurs phases d'alimentation selon l'invention, comprenant une étape d'évaluation d'au moins un paramètre électrique des phases, comprend une étape de répartition des puissances transitant sur les phases, à partir des résultats de l'étape d'évaluation, comprenant les étapes suivantes :
- modulation dynamique des liaisons électriques de charges aux phases,
- et/ou modulation dynamique des liaisons électriques de générateurs aux phases.

De préférence, l'étape d'évaluation comprend la détermination des charges alimentées par les phases et/ou de la puissance alimentant les phases en provenance des générateurs.

Dans un mode de réalisation particulier, le procédé de gestion dynamique assure une régulation de la tension d'au moins une phase donnée, un paramètre évalué à l'étape d'évaluation étant le niveau de tension de la phase, notamment par un examen périodique du niveau de tension des compteurs connectés à cette phase.

De préférence, l'étape de répartition est mise en oeuvre lorsque la tension de phase est inférieure à un premier seuil prédéterminé ou supérieur à un deuxième seuil prédéterminé.

Avantageusement, dans le cas où la tension de phase est inférieure au premier seuil prédéterminé, l'étape de répartition consiste à affecter tout ou partie des charges connectées à cette même phase aux autres phases du réseau et/ou à affecter tout ou partie de la puissance des générateurs connectés aux autres phases du réseau à cette phase.

Dans un mode de réalisation préférentiel, le procédé de gestion dynamique assure un équilibrage des charges sur les différentes phases du réseau, les étapes d'évaluation et de répartition étant mises en oeuvre de manière périodique automatiquement.

De préférence, durant l'étape de répartition, les critères d'affectation des charges aux différentes phases et/ou de répartition d'injection de puissance dans les différentes phases sont configurés pour réaliser un équilibrage consistant à minimiser les déséquilibres de charges entre les phases du réseau.

De préférence, l'étape de répartition comprend un pilotage idoine d'au moins un commutateur variant sélectivement la phase du réseau à laquelle au moins une charge est affectée, et/ou au moins un commutateur régulant la proportion de puissance injectée sur chacune des phases.

Avantageusement, la régulation en tension d'une phase donnée est prioritaire sur l'équilibrage des charges sur les différentes phases.

Un système de gestion dynamique d'un réseau de distribution d'électricité à plusieurs phases d'alimentation selon l'invention, comprend des moyens matériels et/ou logiciels qui mettent en oeuvre un procédé de gestion tel que défini ci dessus.

De préférence, les moyens matériels et/ou logiciels comprennent au moins :
- un élément d'évaluation d'au moins un paramètre électrique des phases,
- et un élément de répartition apte à moduler de manière dynamique des liaisons électriques de charges aux phases et/ou à moduler de manière dynamique des liaisons électriques de générateurs aux phases.

Avantageusement, l'élément d'évaluation est configuré pour déterminer la tension d'une phase donnée et/ou la puissance alimentant chacune des phases en provenance de générateurs et/ou les charges alimentées par chacune des phases.

Avantageusement, l'élément d'évaluation comprend un concentrateur de données en provenance de compteurs de consommation et/ou de compteurs de production connectés sur le réseau.

De préférence, l'élément de répartition comprend au moins un commutateur permettant de varier sélectivement la phase du réseau à laquelle au moins une charge est affectée, et/ou au moins un commutateur permettant de réguler la proportion de puissance injectée sur chacune des phases, lesdits commutateurs étant pilotés par l'élément d'évaluation.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 montre une modulation dynamique des liaisons électriques de générateurs aux phases,
- les figures 2 et 3 montrent une modulation dynamique des liaisons électriques de charges aux phases, respectivement au cours d'un équilibrage des charges sur les différentes phases du réseau et d'une régulation de la tension d'au moins une phase donnée,
- la figure 4 est un schéma d'un commutateur de variation de phase alimentée,
- les figures 5 et 6 sont des exemples de modulation dynamique pour réaliser un équilibrage de charges entre les phases par pilotage des phases alimentées, respectivement si le commutateur est en amont et en aval des compteurs de consommation,
- et la figure 7 est un exemple de modulation dynamique pour réaliser un équilibrage de charges entre les phases par pilotage des puissances injectées aux différentes phases, le commutateur étant entre le compteur de production et le générateur.

### Description de modes préférentiels de l'invention

L'invention sera décrite en application à un réseau de distribution d'électricité, par exemple de type basse tension BT depuis un poste de distribution MT/BT (Moyenne Tension / Basse Tension) vers des consommateurs basse tension (en nombre de l'ordre d'une centaine), notamment des foyers d'habitation. Un poste MT/BT présente plusieurs départs (en nombre de l'ordre de quatre à dix) entre lesquels la puissance est répartie au niveau du poste. Chaque départ se compose principalement de trois phases d'alimentation L1, L2 et L3, et d'un neutre N, et se déploie en une structure radiale présentant plusieurs branchements monophasés ou triphasés pour le raccordement de chaque consommateur au départ.

Sur ce réseau sont répartis des charges consommatrices d'énergie alimentées par une ou plusieurs des phases et/ou des générateurs d'électricité (photovoltaïques, éoliennes, batteries notamment de véhicules automobiles à traction électrique, autres...) injectant de la puissance sur une ou plusieurs phase(s) du réseau.

Pour surveiller la consommation des consommateurs basse tension, un branchement monophasé ou triphasé est classiquement équipé d'un compteur de consommation électrique de type communicant ou intelligent. De même, la surveillance des apports d'énergie au réseau par les générateurs est réalisée à l'aide de compteurs de production répartis et connectés sur le réseau.

Chaque compteur (que ce soit un compteur de consommation ou un compteur de production) est configuré pour transmettre régulièrement des informations de consommation et/ou de production au poste de distribution MT/BT sur lequel il est raccordé. Un concentrateur de données situé sur le réseau, par exemple dans le poste, centralise les informations en provenance des compteurs et traite les relevés successifs de chacun des compteurs raccordés. Les données de comptage sont reçues à fréquence régulière (de l'ordre de la demi-heure à la journée) avantageusement par le biais de courants porteurs en ligne, mais pourraient l'être par des moyens radioélectriques.

Les compteurs de consommation peuvent aussi en outre transmettre en temps réel ou de manière périodique des informations permettant au concentrateur de données de déterminer la tension d'une phase donnée, (reproductible pour les éventuelles trois phases L1, L2, L3 dans le cas d'un branchement triphasé), notamment par un examen périodique du niveau de tension des compteurs connectés à cette phase. Autrement dit, les compteurs communiquent leur niveau de tension au concentrateur, lequel, à partir de l'ensemble de ces résultats provenant de différents lieux du réseau, édite un profil de tension par phase.

De ce qui précède, il est compris que le concentrateur de données, par ses communications à courant porteur en ligne ou radioélectriques avec les différents compteurs (de consommation et/ou de production) répartis sur le réseau, forme un élément permettant d'évaluer ou déterminer au moins un paramètre électrique des phases, tel que le niveau de puissance de chacune et/ou les charges qui sont alimentées par chacune et/ou les puissances injectées pour alimenter chacune par les générateurs.

Une caractéristique essentielle de l'invention repose, dans cet environnement, sur le fait de prévoir un système de gestion dynamique du réseau avec des moyens matériels et/ou logiciels qui mettent en oeuvre un procédé de gestion qui sera décrit plus en détail plus loin, notamment à l'aide d'au moins l'élément d'évaluation de paramètre électrique mais aussi un élément de répartition apte à moduler de manière dynamique des liaisons électriques de charges aux phases et/ou à moduler de manière dynamique des liaisons électriques de générateurs aux phases.

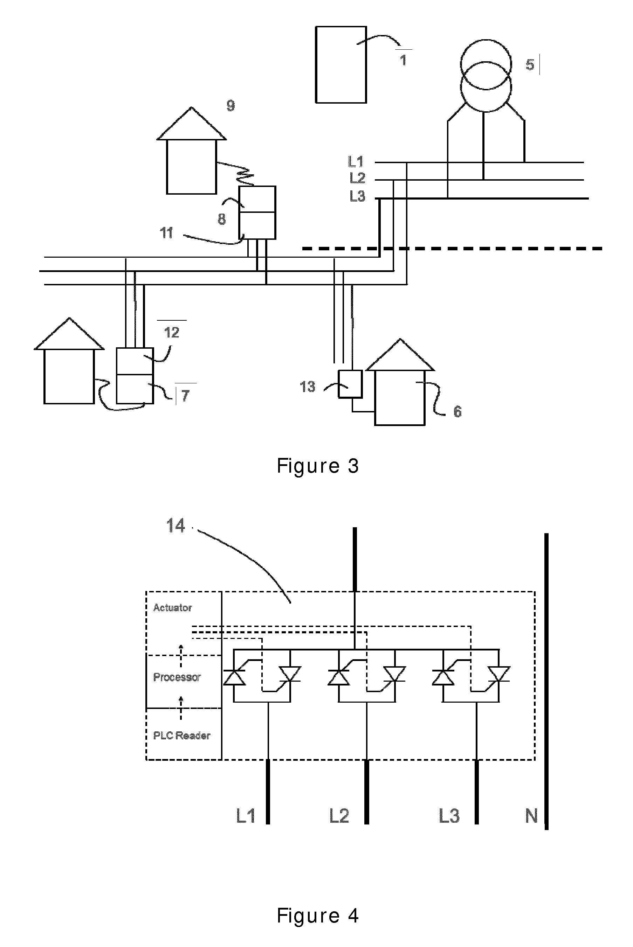

Comme il le sera encore mieux compris dans la suite, l'élément de répartition comprend notamment au moins un commutateur (figure 4) permettant de varier sélectivement la phase L1, L2, L3 du réseau à laquelle au moins une charge est affectée. En complément ou en substitution, au moins un commutateur peut être prévu au niveau des connexions ou liaisons électriques entre les générateurs et les phases du réseau, ce commutateur permettant de réguler la proportion de puissance (énergie ou courant) injectée sur chacune des phases. Le commutateur associé au générateur peut être intégré dans un onduleur notamment dans le cas d'une production photovoltaïque et peut réaliser une régulation sélective ou combinée entre les phases, de manière binaire ou proportionnelle. Les commutateurs de raccordement des charges et de raccordement des générateurs sont notamment pilotés par l'élément d'évaluation, notamment par le concentrateur de données.

Ainsi suite à l' étape d'évaluation d'au moins un paramètre électrique des phases, une étape de répartition des puissances transitant sur les phases, à partir des résultats de l'étape d'évaluation peut être réalisée, en réalisant les étapes de modulation dynamique des liaisons électriques des charges aux phases et/ou de modulation dynamique des liaisons électriques des générateurs aux phases.

Le procédé de gestion qui comprend les étapes préalablement décrites d'évaluation de paramètre et de répartition des puissances, permet d'assurer une régulation de la tension d'au moins une phase donnée et/ou un équilibrage des charges sur les différentes phases du réseau.

Dans le cas de la régulation de tension de phase, l'un des paramètres évalués à l'étape d'évaluation est donc le niveau de tension de la phase, les autres paramètres étant la valeur des charges alimentées par la (les) phase(s) et/ou la valeur des puissances injectées en provenance de générateurs.

L'étape de répartition n'est pas forcément implémentée de manière périodique automatiquement, mais est plutôt mise en oeuvre lorsque la tension de phase évaluée est inférieure à un premier seuil prédéterminé ou supérieur à un deuxième seuil prédéterminé. Les seuils peuvent notamment être établis à partir de valeurs limites haute et basse auxquelles une marge de sécurité est appliquée pour délimiter l'intervalle cible.

Une stratégie avantageuse est de piloter l'ensemble de sorte que l'étape de répartition consiste, dans le cas où la tension de phase est inférieure au premier seuil prédéterminé, à affecter tout ou partie des charges connectées à cette même phase aux autres phases du réseau et/ou à affecter tout ou partie de la puissance des générateurs connectés aux autres phases du réseau à cette phase.

Dans le cas par contre de l'équilibrage de charges, les étapes d'évaluation et de répartition sont avantageusement mises en oeuvre de manière périodique automatiquement, allant de paire avec les modulations dynamiques des liaisons électriques entre le réseau et les charges et/ou les générateurs.

Pour assurer une répartition des puissances sur les phases L1, L2 et L3, les critères d'affectation des charges aux différentes phases et/ou de répartition d'injection de puissance dans les différentes phases sont configurés durant l'étape de répartition pour réaliser un équilibrage consistant à minimiser les déséquilibres de charges entre les phases du réseau, ces déséquilibres ayant été préalablement déterminés par l'élément d'évaluation, notamment par le concentrateur de données. Cette répartition comprend un pilotage idoine des commutateurs de raccordement de charges et/ou des commutateurs de raccordement des générateurs.

En cas de besoins simultanés de régulation de la tension d'au moins une phase donnée et d'un équilibrage des charges sur les différentes phases, la régulation en tension d'une phase donnée est avantageusement prioritaire sur l'équilibrage des charges sur les différentes phases.

Les explications précédentes permettent de comprendre que le fonctionnement des commutateurs pour les charges et pour générateurs tel que présenté assure les modulations dynamiques nécessaires des liaisons électriques entre les phases et respectivement les charges et les générateurs. Ces modulations dynamiques sont contrôlées par le biais d'un pilotage idoine des commutateurs, par l'exemple géré par le concentrateur de données.

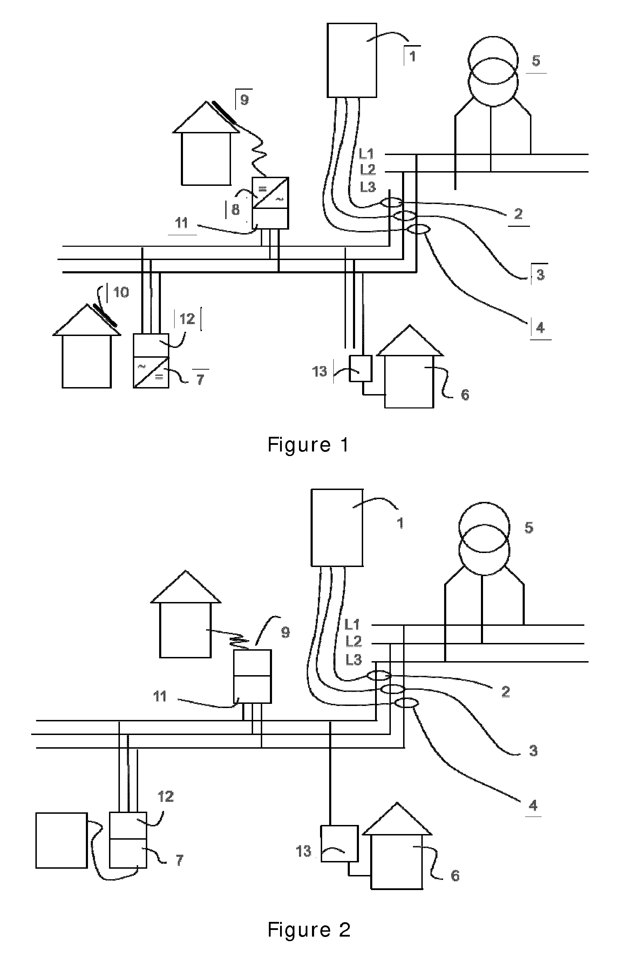

La figure 1 montre une modulation dynamique des liaisons électriques de générateurs aux phases L1, L2 et L3. Le concentrateur de données 1 évalue la charge de chacune des phases du départ depuis le poste de transformation 5 (grâce aux tores de mesure 2; 3 et 4). Les onduleurs 7 et 8 communiquent leur production au concentrateur 1 par l'intermédiaire d'un signal CPL courant porteur en ligne. Ces phases réalisent l'étape d'évaluation. Le concentrateur 1 peut donc ensuite évaluer par calculs le déséquilibre entre les phases et donner un ordre de répartition du courant à injecter sur chacune des phases aux onduleurs 7 et 8, qui comprennent à cet effet chacun un commutateur de répartition (respectivement 12 et 11) pour le raccordement aux phases. Par un pilotage idoine du commutateur par le concentrateur, les onduleurs triphasés sont capables d'injecter la bonne proportion de courant ou puissance sur chaque phase. Le système assure un bon équilibrage en temps réel, notamment lorsque la puissance produite au niveau d'un départ donné est supérieure ou égale à celle du déséquilibre. Les onduleurs sont par exemple alimentés en puissance par les panneaux photovoltaïques 9 et 10.

Les commutateurs pour le raccordement des générateurs peuvent être de même nature que ceux utilisés pour raccorder les charges aux phases de manière sélectivement modulable (voir élément repéré 14 sur la figure 4). Un commutateur peut comprendre un récepteur (ou lecteur) des informations de pilotage en provenance du concentrateur, qui les transmet à un processeur lequel délivre des ordres de commande d'une pluralité d'actionneurs associés aux différentes phases.

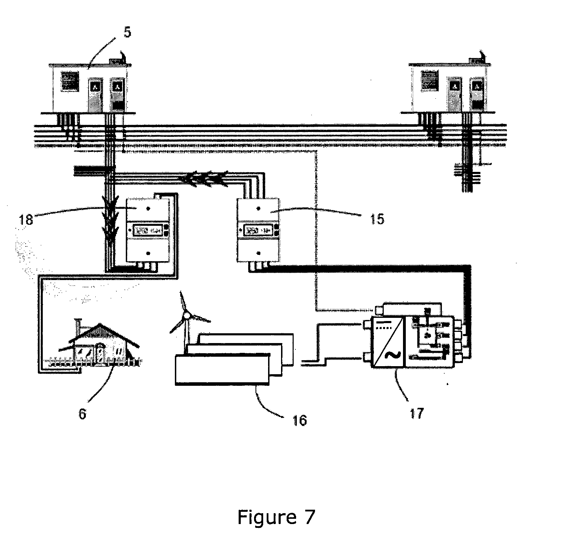

La figure 7 illustre un contexte identique de modulation dynamique pour réaliser un équilibrage de charges entre les phases, le commutateur étant entre le compteur de production 15 et le générateur d'électricité 16. L'équilibre est réalisé par l'onduleur 17 de la production répartie qui peut, à partir du bus continu, réinjecter plus ou moins sur chacune des trois phases. Les compteurs 18 des abonnés triphasés communiquent de manière périodique leur index énergétique au concentrateur de données situé dans le poste 5. Les compteurs triphasés de production 15, par exemple alimentés par des panneaux photovoltaïques, communiquent de la même façon leur production au concentrateur qui, à partir de ces index énergétiques, peut déduire la puissance produite ou consommée moyenne sur la période. En cas de différence importante entre phase (par exemple supérieure à 30%) de puissance moyenne consommée consolidée sur un minimum de deux périodes, le concentrateur envoie un ordre à l'onduleur 17 afin que l'équilibre entre les phases s'améliore au niveau du poste de distribution 5.

La figure 2 montre une modulation dynamique des liaisons électriques de charges aux phases au cours d'un équilibrage des charges sur les différentes phases du réseau. Le concentrateur de données 1 évalue la charge de chacune des phases du départ depuis le poste de transformation 5 (grâce aux tores de mesure 2; 3 et 4). Le concentrateur 1 peut donc ensuite évaluer par calculs le déséquilibre entre les phases. Lorsque le déséquilibre atteint un seuil prédéterminé fixé, le concentrateur 1 interroge les compteurs 7 et 8 équipés des commutateurs 11 et 12 qui lui fournissent leur puissance instantanée. Le concentrateur 1 calcule ensuite la meilleur répartition des compteurs par phase, afin de diminuer autant que possible les déséquilibres en répartissant des charges sur les différentes phases, pour finalement répartir les puissances sur les différentes phases. Le concentrateur 1 pilote pour cela chaque commutateur 14 de manière adaptée afin de se rapprocher de l'équilibre entre phases. Les commutateurs 14 communiquent en CPL avec le concentrateur 1 de données.

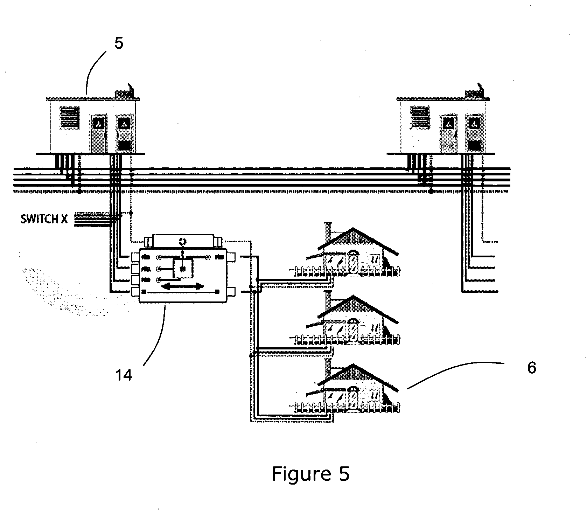

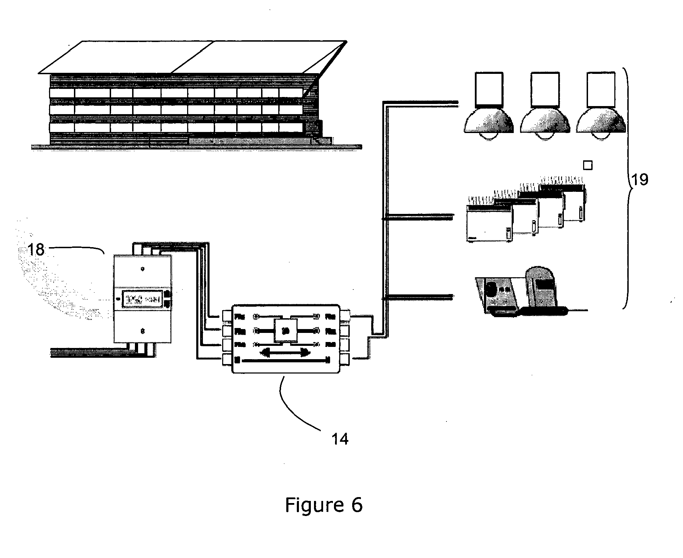

Les figures 5 et 6 illustrent des contextes identiques de modulation dynamique pour réaliser un équilibrage de charges entre les phases par pilotage des phases alimentées. Sur la figure 5, le commutateur 14 est en amont des compteurs de consommation (non représentés) qui s'interposent donc entre les habitations 6 et le commutateur 14, ce dernier pouvant d'ailleurs être prévu pour alimenter en électricité une pluralité d'habitations 6 (ici au nombre de trois). L'équilibre est réalisé par le commutateur 14 qui peut permuter entre les trois phases possibles pour assurer l'alimentation du départ monophasé. Les compteurs des abonnés monophasés communiquent de manière périodique leurs index énergétiques au concentrateur situé dans le poste 5 qui peut déduire la puissance moyenne sur la période. En cas de différence importante entre phase (par exemple supérieure à 30%) de puissance moyenne consommée consolidée sur un minimum de deux périodes, le concentrateur 1 envoie un ordre au commutateur 14 afin que l'équilibre entre les phases s'améliore au niveau du poste de distribution.

Sur la figure 6 par contre, le commutateur 14 est en aval du compteur triphasé de consommation 18 et alimente une pluralité de charges 19 telles que convecteurs de chauffage, lampes ou autres. L'équilibre est réalisé par le commutateur 14 qui peut permuter entre les trois phases. Le principe de fonctionnement est similaire à celui de la figure 5 à la différence que le commutateur est installé chez l'abonné et non plus dans le réseau de distribution, i.e. en amont du compteur 18. Cette solution permet à l'abonné d'optimiser la puissance souscrite de son abonnement. Si l'abonné dispose d'un transformateur MT/BT, cela permet aussi de limiter les pertes liées au déséquilibre.

Il convient de noter que dans les cas des figures 5 et 6, l'action de permutation des commutateurs induit un déphasage de 7ms environ qui n'est pas préjudiciable au fonctionnement des charges 19 et reste situé dans le cadre des microcoupures acceptables selon la norme EN50160 pour les gestionnaires de réseau et 61000-2-4 pour les charges.

La figure 3 montre enfin une modulation dynamique des liaisons électriques de charges aux phases au cours d'une régulation de la tension d'au moins une phase donnée. Les compteurs 13 des habitations 6 communiquent leur niveau de tension au concentrateur 1, qui édite un profil de tension par phase. Lorsque la tension s'approche des valeurs limites hautes ou basses en passant en dessous du premier seuil prédéterminé ou en dessus du deuxième seuil prédéterminé, le concentrateur interroge les compteurs qui lui communiquent leur puissance instantanée. Lorsque la tension passe en dessous du premier seuil prédéterminé, par exemple en bout de réseau, le concentrateur 1 donne l'ordre aux commutateurs connectés à cette même phase de se répartir sur les deux autres phases. Ce processus de régulation de tension est prioritaire sur l'équilibrage de charges des figures 1 et 2.

L'invention concerne enfin un programme informatique comprenant un moyen de code de programme informatique adapté à l'exécution des étapes précédemment décrites, lorsque le programme est exécuté sur un ordinateur.

## Revendications

1. Procédé de gestion dynamique d'un réseau de distribution d'électricité à plusieurs phases d'alimentation, comprenant une étape d'évaluation d'au moins un paramètre électrique des phases, **caractérisé en ce qu'il** comprend une étape de répartition des puissances transitant sur les phases, à partir des résultats de l'étape d'évaluation, comprenant les étapes suivantes :
- modulation dynamique des liaisons électriques de charges aux phases,
- et/ou modulation dynamique des liaisons électriques de générateurs aux phases.

2. Procédé de gestion dynamique selon la revendication 1, **caractérisé en ce que** l'étape d'évaluation comprend la détermination des charges alimentées par les phases et/ou de la puissance alimentant les phases en provenance des générateurs.

3. Procédé de gestion dynamique selon l'une des revendications 1 et 2, **caractérisé en ce qu'il** assure une régulation de la tension d'au moins une phase donnée, un paramètre évalué à l'étape d'évaluation étant le niveau de tension de la phase, notamment par un examen périodique du niveau de tension des compteurs connectés à cette phase.

4. Procédé de gestion dynamique selon la revendication 3, **caractérisé en ce que** l'étape de répartition est mise en oeuvre lorsque la tension de phase est inférieure à un premier seuil prédéterminé ou supérieur à un deuxième seuil prédéterminé.

5. Procédé de gestion dynamique selon la revendication 4, **caractérisé en ce que** dans le cas où la tension de phase est inférieure au premier seuil prédéterminé, l'étape de répartition consiste à affecter tout ou partie des charges connectées à cette même phase aux autres phases du réseau et/ou à affecter tout ou partie de la puissance des générateurs connectés aux autres phases du réseau à cette phase.

6. Procédé de gestion dynamique selon l'une des revendications 1 à 5, **caractérisé en ce qu'il** assure un équilibrage des charges sur les différentes phases du réseau, les étapes d'évaluation et de répartition étant mises en oeuvre de manière périodique automatiquement.

7. Procédé de gestion dynamique selon la revendication 6, **caractérisé en ce que** durant l'étape de répartition, les critères d'affectation des charges aux différentes phases et/ou de répartition d'injection de puissance dans les différentes phases sont configurés pour réaliser un équilibrage consistant à minimiser les déséquilibres de charges entre les phases du réseau.

8. Procédé de gestion dynamique selon l'une des revendications 1 à 7, **caractérisé en ce que** l'étape de répartition comprend un pilotage idoine d'au moins un commutateur variant sélectivement la phase du réseau à laquelle au moins une charge est affectée, et/ou au moins un commutateur régulant la proportion de puissance injectée sur chacune des phases.

9. Procédé de gestion dynamique selon l'une des revendications 1 à 8, **caractérisé en ce que** la régulation en tension d'une phase donnée est prioritaire sur l'équilibrage des charges sur les différentes phases.

10. Système de gestion dynamique d'un réseau de distribution d'électricité à plusieurs phases d'alimentation, **caractérisé en ce qu'il** comprend des moyens matériels et/ou logiciels qui mettent en oeuvre un procédé de gestion selon l'une quelconque des revendications 1 à 9, lesdit moyens matériels et/ou logiciels comprennent au moins :
- un élément d'évaluation d'au moins un paramètre électrique des phases,
- et un élément de répartition apte à moduler de manière dynamique des liaisons électriques de charges aux phases et/ou à moduler de manière dynamique des liaisons électriques de générateurs aux phases.

11. Système de gestion selon la revendication 10, **caractérisé en ce que** l'élément d'évaluation est configuré pour déterminer la tension d'une phase donnée et/ou la puissance alimentant chacune des phases en provenance de générateurs et/ou les charges alimentées par chacune des phases.

12. Système de gestion selon l'une des revendications 10 et 11, **caractérisé en ce que** l'élément d'évaluation comprend un concentrateur de données en provenance de compteurs de consommation et/ou de compteurs de production connectés sur le réseau.

13. Système de gestion selon la revendication 12, **caractérisé en ce que** l'élément de répartition comprend au moins un commutateur permettant de varier sélectivement la phase du réseau à laquelle au moins une charge est affectée, et/ou au moins un commutateur permettant de réguler la proportion de puissance injectée sur chacune des phases, lesdits commutateurs étant pilotés par l'élément d'évaluation.
